# EUROPEAN PATENT SPECIFICATION

(11) **EP 0 606 852 B1**
(45) Date of publication and mention of the grant of the patent: **15.10.1997**
(21) Application number: 94100164.6
(22) Date of filing: 07.01.1994
(51) Int. Cl.: B60R 9/04, B60R 9/045

(54) **Roof rack, ski carrier or the like, for motor vehicles having roof rails of the so-called American type**
Dachgepäckträger, Skiträger oder ähnliches für Kraftfahrzeuge mit Dachreling
Galerie de toit, porte-skies ou similaire pour véhicules automobiles équipés avec rails de toit

(30) Priority: 13.01.1993 IT TO930004 U
(43) Date of publication of application: 20.07.1994
(73) Proprietor: FAPA S.p.A., I-10092 Beinasco (Torino) (IT)
(72) Inventor: Baravalle, Ugo, I-10123 Torino (IT)
(74) Representative: Saconney, Piero

(56) References cited:
- WO-A-91/11344
- DE-U- 8 229 446
- DE-U- 8 404 525
- FR-A- 2 431 396

## Description

The present invention relates to apparatus, such as a load-carrying rack or ski-rack, of the type indicated in the pre-characterising portion of appended claim 1.

Such an apparatus is known from DE-U-84 04 525.

A very wide range of models of motor vehicle are currently available with bodies of the station-wagon type, on the roof of which are mounted roof-racks of the so-called American type which comprise simply a pair of lateral, longitudinally-extending rails or railings. These rails are intended for the fixing of various types of transport apparatus comprising essentially a pair of transverse bars.

The rails of roof -racks of the America type have sections which vary in shape and dimensions from one model to another.

The fixing of the transverse bars to the rails is achieved by screw clamps of shapes and dimensions which vary according to the rails on which they are intended to be fitted. See for instance WO-A-91 11 344 which shows the use of screw clamps, of a belt having a toothed portion on its second end, its first end being anchored to the body of a support and fixing assembly. This forces the manufacturers of load-carrying racks, ski-racks or like transport devices to provide a whole range of clamps of different shapes and dimensions for a single basic model of the apparatus. Also, the purchaser of the transport device must, at the time of purchase, make sure that the clamps provided with the apparatus correspond to the rails mounted on the roof of his vehicle.

One object of the invention is to provide a load-carrying rack, ski-rack or the like, of the type defined above, which has apparatus for supporting it on and fixing it to the rails which is universal, that is, adaptable without any modification to rails of any shape and dimensions.

Support and fixing devices which consist of screw clamps require rather a long time and a certain degree of manual dexterity for their installation and removal. This leads the user to leave the load-carrying rack, ski-rack or the like installed even when he is not using it for transporting equipment, which is disadvantageous as regards the aerodynamics of the vehicle and also accelerates the aging of the transport device.

A further object of the invention is to provide a load-carrying rack, ski-rack or the like, of the type defined above which is extremely simple and quick to instal and remove without the need for tools.

According to the invention these objects are achieved by means of apparatus as defined above, characterised by the features indicated in claim 1.

In the apparatus according to the invention, the use of a flexible belt enables each bearing and fixing assembly to be adapted to any type of rail as long as there is a space or aperture between this and the roof of the vehicle. The installation of the support and fixing assemblies on the roof and their removal therefrom require very simple manoeuvres equivalent to the fastening and unfastening of a ski-boot.

Preferably the body of each support and fixing assembly and the respective bar are connected by mutual fixing means which allow the position of the body along the bar be adjusted.

This characteristic enables the load carrying rack, ski-rack or the like according to the invention not only to be adapted to rails of different shapes and dimensions but also to roof-racks of the American type whose rails have different gauges.

The subject of the invention will be better understood from a reading of the detailed description of a preferred embodiment which follows, and which is illustrated in the appended drawings, given by way of non-limitative example and in which:
Figure 1 is a perspective view illustrating a roof of a motor vehicle provided with longitudinal rails on which a pair of load-carrying rack bars is mounted.
Figure 2 is a cross-section of a support and fixing assembly taken in the plane indicated II-II in Figure 1,
Figure 3 is an exploded perspective view of the same assembly,
Figure 4 is a partially-exploded, inverted view illustrating the same assembly and a part of the respective bar,
Figures 5, 6 and 7 are partial perspective views illustrating three successive stages in the installation of the support and fixing assembly on a rail,
Figure 8 is a section similar to that of Figure 2 illustrating the assembly in an intermediate installation stage, and
Figure 9 is a partially-sectioned view, like Figure 2, illustrating the assembly installed on a rail having a different shape and different dimensions from those of the rail of Figure 2.

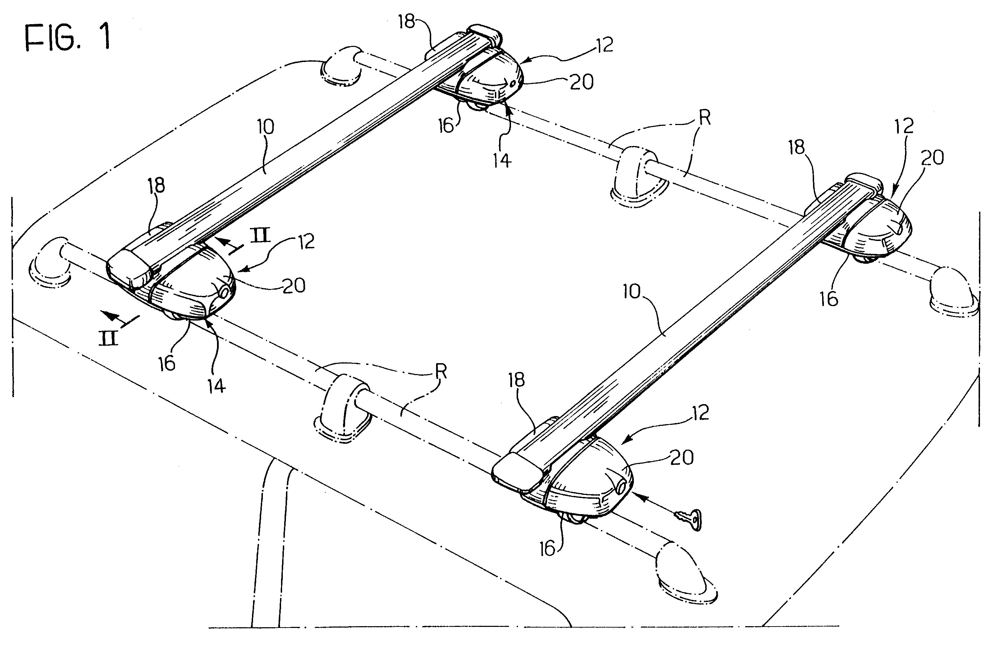

With reference to Figure 1, a motor-vehicle roof is provided with a pair of lateral, longitudinally-extending rails R, of well known type constituting a so called American roof-rack.

Load-carrying transverse bars constituted by tubular elements 10 are mounted on the rails R.

Each bar 10 is fixed, near its ends, to the two rails R by respective support and fixing assemblies indicated 12.

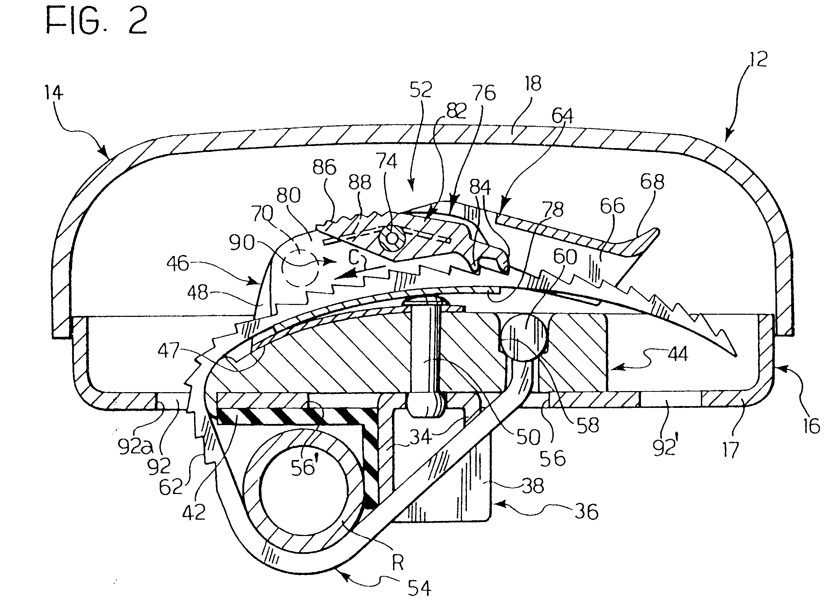

One of the assemblies 12 is illustrated in detail in Figures 2 to 8 to which reference will now be particularly made.

Each support and fixing assembly 12 comprises a body generally indicated 14 which is constituted by a shell structure. This shell structure includes a base part 16, an upper part 18 and a removable cover 20. The base part 16 is preferably constituted by a strong sheet metal element which is cut and drawn into a dished shape with a base wall indicated 17.

The upper part 18 and the cover 20, which are preferably of strong plastics material, each cover about a respective half of the base part 16.

The upper part 18 is shaped so as to have a channel 22 for receiving a corresponding part of the bar 10.

The body 14 of the assembly 12 and the bar 10 are connected together by mutual fixing means which enable the position of the body along the bar to be adjusted.

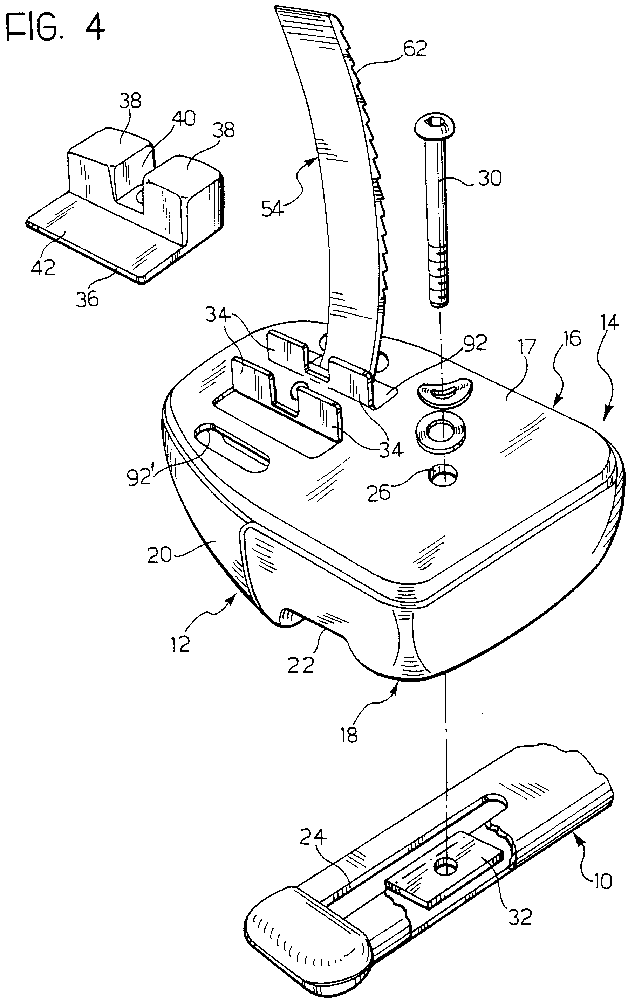

A preferred embodiment of the mutual fixing means will now be described with particular reference to Figure 4.

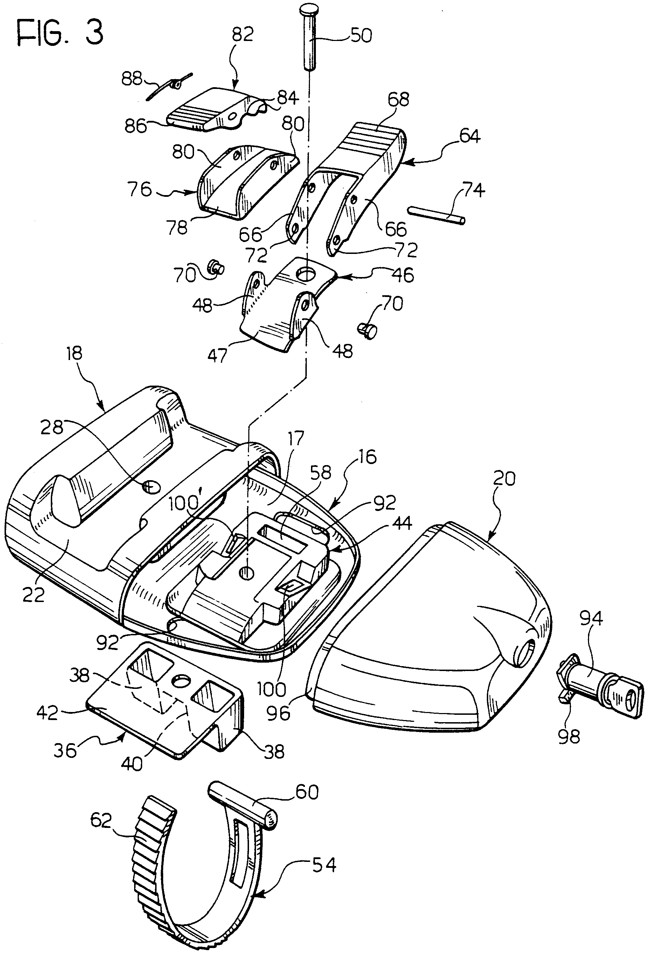

The tubular bar 10 has a longitudinal slot 24 (Figure 4) in its region which is fitted into the channel 22, the slot being formed in a lower part thereof which mates with the base of the channel 22. The base wall 17 of the base part 16 and the base wall of the channel 22 have respective aligned holes 26 (Figure 3) and 28 (Figure 4). The shank of a clamping screw 30 extends through these holes 26 and 28 while its head is located beneath the base part 16 of the body 14. The shank of the screw 30 extends through the slot 24 and is engaged in the threaded bore of a nut 32 of plate shape housed within the bar 10. When the screws 30 of the bodies 14 associated with any one bar 10 are slackened, the installer of the load-carrying rack may adjust the positions of the assemblies 12 once and for all so as to adapt the latter precisely to the spacing of the two rails R of Figure 1. This adjusted position is then fixed for an indeterminate time by means of the tightening of the screws 30.

With reference to Figures 2,3,4 and 8, the base wall 17 of the base part 16 has four tabs 34 formed blanking from the base part itself and pending at right angles thereto, the tabs projecting downwardly in the installed condition of the body 14.

The tabs 34 have an associated covering element of soft material, such as rubber, generally indicated 36.

The covering element 36 has a double projection 38 with two hollow parts fitted onto respective pairs of tabs 34. The double projection 38 has a central recess 40, the purpose of which will be explained below.

Alongside the double projection 38, the element 36 has a wide, flat limb 42 which defines a bearing face also conventionally indicated 42.

The body 16 is mounted in a precise position on the rail R by the placing of the bearing face 42 on the rail itself with the side face of the lower double projection 38 engaged with the side face of the rail R. The side face of the rail R which is engaged is preferably the inner one, that is the one facing the other rail R.

The engagement of the projections 38 of the two assemblies 12 associated with the same bar 10 ensures the centring of the bar 10 on the roof of the vehicle once the adjustment has been carried out as described above with particular reference to Figure 4. This same positioning also ensures that the bar 10 cannot move as a result of any strong transverse loads bearing on it during travel.

With reference now to Figures 2, 3 and 8, a generally flat block 44 is fixed to the base wall 17 of the base part 16. The block 44 is preferably a solid element of suitable strong plastics material.

The block 44 acts as a support for a bracket 46 of blanked bent sheet metal which has a base wall 47 and a pair of articulation lugs 48.

A rivet 50 (or a bolt) keeps the block 44 and the bracket 46 both rigidly fixed to the base wall 17 of the base part 16.

The lugs 48 of the bracket 46 are so arranged as to project above the limb or bearing face 42 as well as the respective rail R in the installed condition.

A buckle generally indicated 52, which will be described in detail below, is secured to the block 44 between the lugs 48 of the bracket 46.

Still with reference to Figures 2, 3 and 8, the body 14 has an associated flexible belt 54 of relatively inextensible plastics material. The base wall of the base part 16 has an elongate aperture therein on that side of the projection 38 opposite the face which cooperates with the rail R and the block 44 has a corresponding slot 58. The slot 58 has a narrowed portion (not referenced) in its part adjacent the slot 56.

The belt 54 has an anchoring enlargement 60 of generally cylindrical shape at one end.

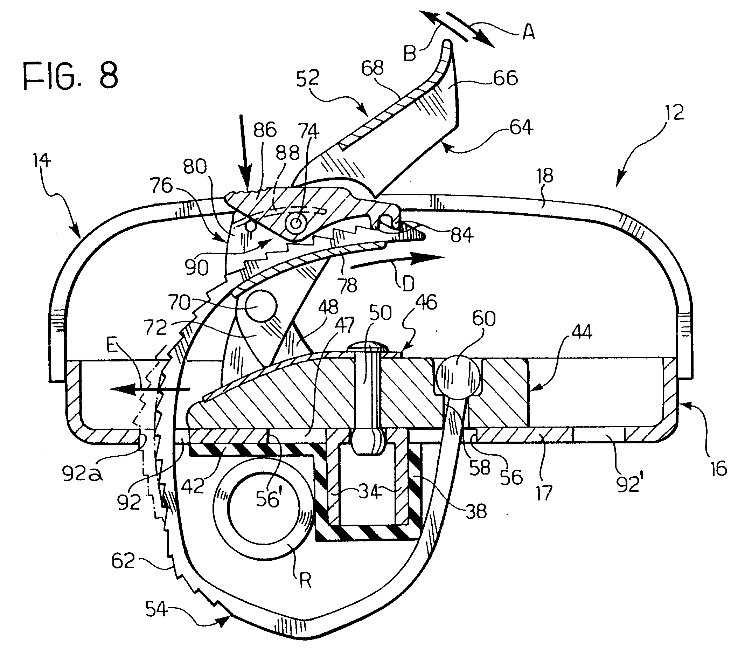

The assembling of the belt 54 with the body 16 is carried out by threading that end of the belt opposite the enlargement 60 from above (in Figures 2 and 8) through the slots 58 and 56. At the end of this threading, the enlargement 60 is brought into engagement with the narrowed portion of the slot 58 and cannot pass through.

The belt 54 has a toothed face 62, with saw teeth, along a length thereof and up to its end opposite the enlargement 60. In the preferred embodiment, shown in the drawings, the toothed faced 62 is an extradotal face, that is, an outer face relative to the turn which, as will be seen, the belt 54 is intended to form.

Still with reference to Figures 2, 3 and 8, the preferred structure of the buckle 52 will now be described.

The buckle 52 includes a manual traction member 64, preferably constituted by a strong piece of sheet metal which is blanked and bent. The traction member 64 has a pair of opposed sides 66 are interconnected at one end by a yoke 68 which is shaped and knurled and serves as the member for gripping by the fingers.

At the opposite end from the yoke 68, the two sides 66 are articulated to the lugs 48 of the bracket 46 by means of transverse pins 70. The traction member 64 is thus articulated to the bracket 46 like a second order lever.

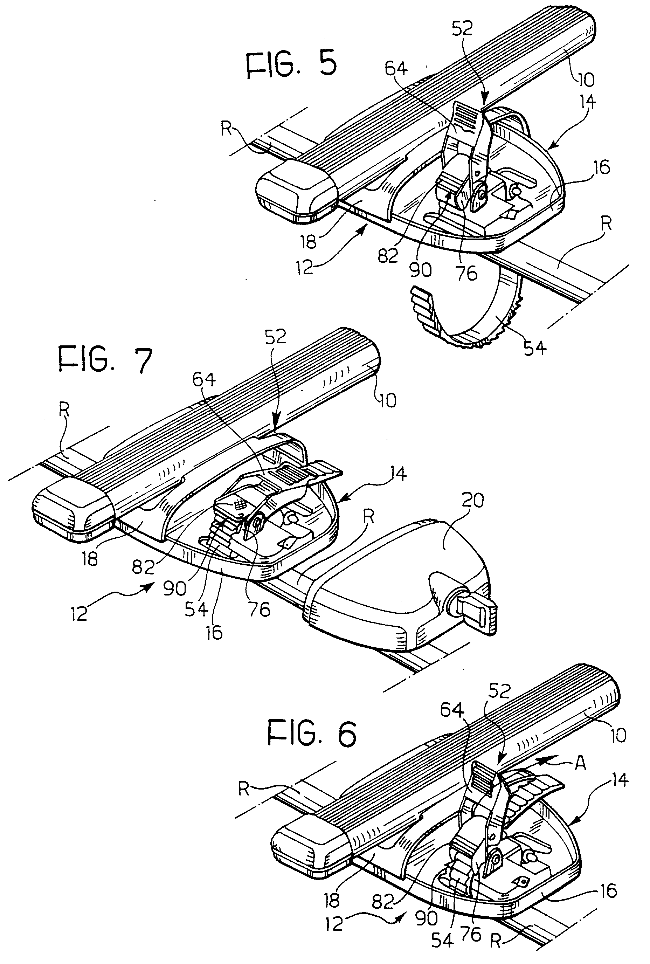

The arrangement is such that the traction member 64 may be pivoted between two angular positions. One of these positions, termed "slack", is illustrated in Figures 5 and 6 and the other position, termed "clamped", is illustrated in Figures 2 and 7. Between these two angular end positions, the traction member 52 passes through an intermediate dead point illustrated in Figure 8.

As illustrated in particular in Figure 8, the two sides 66 of the traction member 64 terminate in respective nose parts 72. In passing through the intermediate, dead point, these nose parts 72 slide with slight forcing on that part of the base wall 47 of the bracket 46 that interconnects the two lugs 48.

Still with reference to Figures 2, 3 and 8, a rocker member 76 is pivoted by means of a transverse pin 74 between the two sides 66 of the traction member 64. The rocker member 76 is preferably constituted by a piece of strong sheet metal which is blanked and bent into a channel shape with a base wall 78 and a pair of opposing side walls 80.

A pawl 82 is located in the channel of the rocker member 76. The pawl 82 is preferably constituted by a piece of rigid plastics material. It is pivoted in the channel by means of the same pin 74 as that which articulates the rocker member 76 to the traction member 64, that is about a pivot axis parallel to the pivot axis of the traction member 64. The pawl 82 behaves as a first order lever. One end of the pawl 82, located beneath the gripper end 68 of the traction member 64, is shaped as a double nose 84 which projects towards the base wall 78 of the rocker 76. The other end of the pawl 82, indicated 86, acts as an operating member.

The pawl 82 and one of the sides 80 of the rocker member 76 are interconnected by a pin spring 88 which acts so as to urge the double nose 84 towards the base wall 78 and force it against the toothed face 62 of the belt 54 whose other face bears on the base wall 78 of the rocker member 76.

The base wall 78 and the pawl 82 which overlies it define opposite surfaces, lower and upper respectively, of a through-seat indicated 90 in Figures 2 and 8.

Close to the end of the block 44 opposite that to which the belt 54 is anchored by means of its enlargement 60, the base wall 17 of the base part 16 has a through slot 92 for the belt 54.

Reference will now be made to Figures 2, 5, 6, 7 and 8 to describe the sequence of fixing of the assembly 12 to the rail R.

In Figure 5, the body 16 of the assembly 12 has been positioned correctly on the rail R and the cover 20 has been removed. The belt 54 is passed around the rail R and then inserted successively through the slot 92 and the through-seat 90 between the rocker member 76 and the pawl 82 so as to form a turn around the rail R. In passing through the seat 90, each of the saw teeth of the belt 54 raises the double nose 84 of the pawl 82 successively against the force of the pin spring 88. The double nose 84, in reinserting itself in the spaces between the teeth of the belt 54 prevents the latter from moving backwards.

When the installer has judged that he has passed a sufficient length of the toothed part of the belt 54 through the through-seat 90 of the buckle 52, as shown for example in Figure 6, he pivots the traction member in the direction of the arrow A in Figures 6 and 8 making it pass beyond the dead point of Figure 8. At the end of this manoeuvre, the traction member 64 reaches the clamping position of Figures 2 and 7, drawing with it the belt 54. If the correct length of the belt 54 has been passed through the through-seat 90, the condition shown in Figures 2 and 7 corresponds to strong clamping of the belt 54 around the rail R.

The traction member 64 cannot return spontaneously in the opposite direction, in the direction of the arrow B of Figure 8, from the clamped position: as may be seen in Figure 2, the arrangement is such that the toothed part of the belt 54, held by the pawl 82 in the through-seat 90, exerts a reverse traction force indicated by the arrow C in Figure 2, the line of action whereof passes between the fulcrum 70 of the traction member 52 and the support block 44 with a consequent component of force which tends to keep the traction member 64 applied firmly against the block 44.

In order to ensure that the belt 54 wraps around the rail R with the greatest friction surface possible, the part of the belt 54 between the slot 56 and the rail R can pass through the recess 40 in the double projection 38, as may again be seen in Figure 2.

If, once the clamped condition of Figures 2 and 7 has been achieved, the installer notices that the belt 54 is not sufficiently tight around the rail R, it suffices for him to move the traction member 64 in the slackening sense, indicated by the arrow B in Figure 8 so as to recover the play making the pawl 82 jump forward over one or more of the teeth of the belt 54 as shown by the arrow D in Figure 8, and then to return the traction member 52 to the clamping position with the new adjustment.

The operation of adjusting the length of the belt 54 may be effected with the traction member 64 in the slackened position, the toothed part of the belt 54 being made to advance gradually through the through-seat 90.

It is possible to carry out the adjustment in a more practical manner (Figure 8) by making use of the edge 92a of the slot 92 which faces the teeth 62. To effect the adjustment in this manner, the traction member 64 is moved forward and backward. Each time the traction member 64 is rotated in the slackening sense B, if the friction between the double nose 84 of the pawl and the sloping surfaces of the teeth 62 is sufficient, the part of the belt 54 inserted in the seat 90 is drawn backward and the turn formed by the belt is "inflated" in the direction of the arrow E in Figure 8, whereby its teeth come to engage the edge 92a. Following this engagement, if the rotation of the traction member 64 is continued in the slackening sense B the toothed part engaged by the double nose 84 advances one or more steps relative to the pawl 82 and the turn tightens. Thus it is possible to adjust the clamping of the belt 54 around the rail R precisely with a "pumping" operation on the traction member 64.

Once the body 16 has been fixed to the rail R, the cover 20 is replaced on the base part 16.

To advantage, the cover 20 has a key operable lock, the block of which is indicated 94 in Figure 3.

The cover 20 has a rebated edge 96 (Figure 3) which is tight fit in the upper part 18 of the body 16. The lock has a rotatable latch member 98 which is a tight fit in a seat 100 formed in the block 44.

To remove the apparatus from the roof of the motor vehicle it suffices to remove the covers 20 from the assemblies 12 and to press the operating member 86 of each pawl 82 in the direction of the arrow F in Figure 8 to free the respective belts 54 and to unthread them.

It has been found that, for convenience of operating the traction member 64, it is convenient for this latter to be moved from the slack position to the clamping position (in the direction of the arrow A in Figure 8) on that side of the vehicle which is towards the middle of the roof). In order for all the bodies 16 to be oriented in the same way relative to the direction of movement of the vehicle, as in Figure 1, it is however convenient to provide right and left-hand support and fixing assemblies. For this purpose it is convenient for a single assembly to lend itself equally well to assembly as a right-hand or a left-hand assembly. To this end, the block 44 and the additional element 36 may be mounted in a mirror imaged position on the base part 16 of the body 14 relative to that shown in Figures 2 and 8. To achieve this mirror-image option, the block has a engagement seat 100' (Figure 3) in a position symmetrical with respect to the seat 100. Thus also, a slot 56' and a slot 92' are located in mirror-imaged positions relative to the slot 56 and the slot 92 in the base wall 17 of the base part 16.

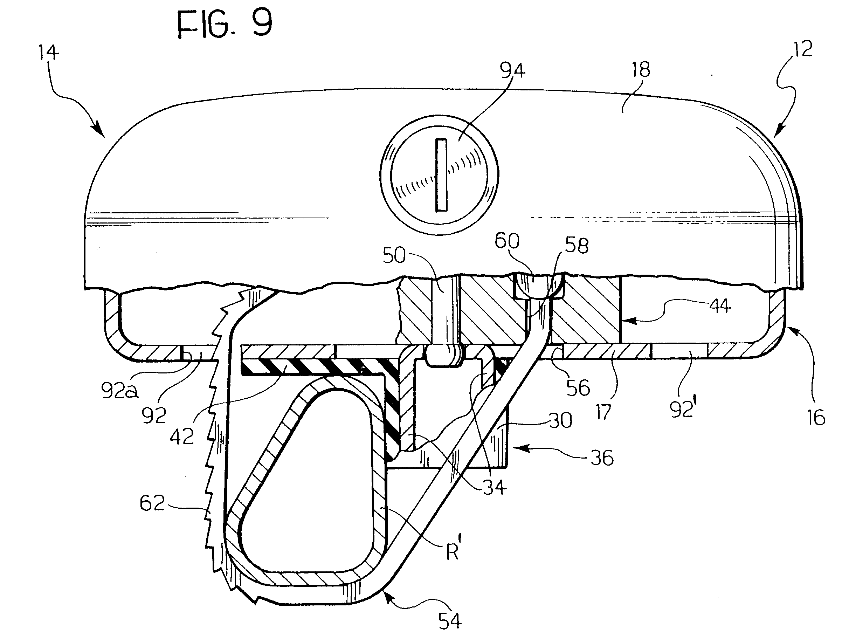

In Figures 2 and 8, a rail R of relatively small circular section has been shown. Figure 9 illustrates one of the many possibilities of use of apparatus according to the invention with a rail with a different section and different dimensions, indicated R'. The parts of the device which appear in Figure 9 are indicated by the same reference numerals as in the preceding Figures and do not require any further description.

## Claims

1. Apparatus, such as a load-carrying rack or ski-rack, for transporting loads on a roof of a motor vehicle fitted with a pair of lateral, longitudinally-extending rails (R; R'), of the type including a bar (10) which can be mounted transversely on the pair of rails (R; R') and provided with support and fixing assemblies (12) for resting on the rails and fixing thereto, wherein each support and fixing assembly (12) includes a body (14) to which the bar (10) is fixed and which has a face (42) for bearing on the rail (10), a flexible elongated member (54) for wrapping tightly around the rail (R; R'), a first end of which being anchored to the body (14), a second end of which being arranged to releasable engage into a fixing means (5) fixed to the body (14),
characterised in that
- the flexible elongated member is a belt (54) having a toothed portion on the second end,
- the fixing means is a drawing and clamping buckle (52) fixed to the body (14) and intended for cooperating with the teeth of the belt (54) threaded therein,
- so that the belt (54) can be drawn by said buckle (52) and clamped against sliding movement in correspondence of its toothed portion, in several positions which can be selected in accordance with the dimensions of the transverse section of the rail (R; R').

2. Apparatus according to Claim 1, characterised in that the buckle (52) includes a manual traction member (64) of second-order-lever type, which has an intermediate through-seat (90) through which the belt (54) may be threaded, one end of the traction member (64) being pivoted on the body (14) about pivot axis transverse the belt (54) so that the traction member (64) may be turned between two angular positions, for slackening and clamping, and a gripper member (82) being associated with the through-seats (90) for clamping the belt (54) relative to the seat (90), in the said selectable positions, the arrangement being such that, with the belt (54) threaded through and clamped in the seat (90) the turning of the traction member (64) from the slack position to the clamping position causes the belt (54) to move from a slack condition to a clamped condition around the rail (R;R') and being further such that, with the traction member (64) in the clamping position, the belt (54) exerts a component of force on the traction member (64) such as to keep it in the clamped position.

3. Apparatus according to Claim 2, characterised in that one of the faces (62) of the belt (54) is saw-toothed and the gripper member is a pawl (82) which defines a surface of the through-seat (90) which corresponds to the toothed face (62) of the belt (54), the pawl (82) being pivoted in the form of a first-order lever on the traction member (64) for pivoting about a pivot axis parallel to the pivot axis of the traction member (64), one end of the pawl (82) being shaped as a nose (84) for engaging the teeth (62) of the belt (54) and its other end (86) acting as a release member, the through-seat (90) having a surface (78) for bearing on that face of the belt (54) opposite the toothed face, and resilient means (88) being provided for biasing the pawl (82) to the position in which its nose (84) engages the teeth (62).

4. Apparatus according to Claim 3, characterised in that the toothed face (62) of the belt (54) is an extradotal face.

5. Apparatus according to Claim 4, characterised in that the through-seat (90) is defined between the pawl (82) and a rocker member (76) pivoted on the traction member (64) about the same pivot axis as the pawl (82) and which has the said surface (78) for bearing on the non-toothed face of the belt (54).

6. Apparatus according to Claim 5, characterised in that the body (14) has a stop edge (92a) facing the teeth (62) of the belt (54) the arrangement being such that, with the belt (54) engaged in the through-seat (90), rotation of the traction member (64) in the sense of loosening the belt (54) brings the teeth (62) of the latter into engagement with the stop edge (92a), after which the further rotation of the traction member (64) in the slackening sense makes the pawl (82) ride over the saw teeth (62) while the belt (54) is held firm, with consequent shortening of the length of the belt (54) between the through-seat (90) and the end (60) of the belt (54) anchored to the body (14).

7. Apparatus according to any one of the preceding claims, characterised in that the body (14) is a shell structure including a base part (16) which has the said face (42) for bearing on the rail (R;R') on its underside and which has apertures (56,92) for the passage of the belt (54) and which carries a support (44) on its upper surface which in turn carries the buckle (52), an upper part (18) located alongside the buckle (52) and its support (44) and on which there is fixed the bar (10), and a removable cover (20) which covers the zone of the buckle (52) and its support (44).

8. Apparatus according to Claim 7, characterised in that the support (44) for the buckle (52) is a solid block (44) which has a slot (58) for the passage of the belt (54) and the belt (54) has an anchoring enlargement (60) at its anchored end of dimensions such as not to pass through the slot (58).

9. Apparatus according to Claim 7 or 8, characterised in that the upper part (18) of the body (14) is shaped so as to have a channel (22) for receiving the bar (10).

10. Apparatus according to any one of Claims 7 to 9, characterised in that the base part (16) and the cover (20) of the body (14) are interconnected by a key-operable lock (94).

11. Apparatus according to any one of the preceding claims, characterised in that the face (42) of the body (14) which bears on the rail (R;R') has a projection (38) attached beneath it for engagement by one side of the rail (R;R') opposite that corresponding to the part of the belt (54) which can be threaded through the buckle (52) to hold the bar (R;R') between this projection (38), the bearing face (42) and the belt itself.

12. Apparatus according to Claim 11, characterised in that the projection (38) has a central recess (40) for the passage of the belt (54).

13. Apparatus according to Claim 11 or 12, characterised in that the projection (38) is part of an element (38) of soft material, such as rubber, which also defines the face (42) of the body (14) for bearing on the rail (R;R').

14. Apparatus according to any one of the preceding claims, characterised in that the body (14) and the bar (10) are connected together by mutual fixing means (24,30,32) which enable the position of the body (14) along the bar (10) to be adjusted.

15. Apparatus according to Claim 14, characterised in that the bar (10) is tubular and has a longitudinal slot (24) in its lower part which mates with an upper part (18) of the body (14) and a clamping screw (30) extends through the body (14) and the slot (24) and has a head located beneath the body (14), and the bar (10) contains a nut (32) engaged by the screw (30).

## Patentansprüche

1. Vorrichtung, wie zum Beispiel ein Lastenträgergestell oder Skiträger, zum Transportieren von Lasten auf einem Dach eines Kraftfahrzeugs, das mit einem Paar seitlicher, sich länglich erstreckender Schienen (R; R') versehen ist, von dem Typ, der einen Balken (10) umfaßt, der quer auf dem Schienenpaar (R; R') befestigt werden kann, und ausgestattet ist mit Träger- und Befestigungsaufbauten (12) zum Ruhen auf den Schienen und zur Befestigung an diesen, wobei jeder Träger- und Befestigungsaufbau (12) einen Körper (14) umfaßt, auf dem der Balken (10) befestigt ist und der eine Fläche (42) zum Auflagern auf der Schiene (10) aufweist, und ein biegsames, langgezogenes Glied (54) zum Festwickeln um die Schiene (R; R'), dessen erstes Ende am Körper (14) verankert ist und dessen zweites Ende so angeordnet ist, daß es lösbar in ein am Körper (14) befestigtes Befestigungsmittel (5) eingreift, dadurch gekennzeichnet, daß
- das biegsame, langgezogene Glied ein Gurt (54) mit einem gezahnten Teil am zweiten Ende ist,
- das Befestigungsmittel eine Zieh- und Klemmschnalle (52) ist, die am Körper (14) befestigt ist und mit den Zähnen des darin eingefädelten Gurtes (54) zusammenzuwirken soll,
- so daß der Gurt (54) mittels der Schnalle (52) gezogen werden kann und entsprechend seinem gezahnten Teil in verschieden Positionen, die gemäß den Dimensionen des Querschnitts der Schiene (R; R') gewählt werden können, gegen gleitende Bewegung festgeklemmt werden kann.

2. Vorrichtung gemäß Anspruch 1, dadurch gekennzeichnet, daß die Schnalle (52) ein manuelles Ziehglied (64) vom Hebeltyp zweiter Ordnung umfaßt, das eine Zwischen-Durchgangsaufnahme (90) aufweist, durch die der Gurt (54) gefädelt werden kann, wobei ein Ende des Ziehglieds (64) um eine Schwenkachse quer zum Gurt (54) so auf dem Körper (14) schwenkbar ist, daß das Ziehglied (64) zwischen zwei Winkelpositionen, zum Lockern und zum Spannen, gedreht werden kann, und wobei ein Greiferglied (82) mit den Durchgangsaufnahmen (90) zum Festklemmen des Gurtes (54) in Bezug auf die Aufnahme (90) in den wählbaren Positionen, verbunden ist, wobei die Anordnung so ist, daß bei durchgefädeltem und in der Aufnahme (90) festgeklemmtem Gurt (54) das Drehen des Ziehglieds (64) aus der Lockerposition in die Festklemmposition die Bewegung des Gurtes (54) aus einem lockeren Zustand in einen festgeklemmten Zustand um die Schiene (R; R') verursacht, und weiters so ist, daß, wenn das Ziehglied (64) in der Festklemmposition ist, der Gurt (54) eine Kraftkomponente auf das Ziehglied (64) ausübt, so daß es in der festgeklemmten Position gehalten wird.

3. Vorrichtung nach Anspruch 2, dadurch gekennzeichnet, daß eine der Flächen (62) des Gurtes (54) sägegezahnt ist und daß das Greiferglied eine Klinke (82) ist, die eine Oberfläche der Durchgangsaufnahme (90) definiert, die mit der gezahnten Fläche (62) des Gurtes (54) korrespondiert, wobei die Klinke (82) zum Schwenken in der Form eines Hebels erster Ordnung auf dem Ziehglied (64) um eine Schwenkachse parallel zur Schwenkachse des Ziehglieds (64) schwenkbar ist, wobei ein Ende des Greifers (82) als Nase (84) zum Eingreifen in die Zähne (62) des Gurtes (54) geformt ist, und sein anderes Ende (86) als Löseglied wirkt, wobei die Durchgangsaufnahme (90) eine Oberfläche (78) zum Auflagern auf jener Fläche des Gurtes (54) aufweist, die der gezahnten Fläche gegenüberliegt, und wobei Federmittel (88) zum Vorspannen der Klinke (82) in die Position vorgesehen sind, in der ihre Nase (84) in die Zähne (62) eingreift.

4. Vorrichtung gemäß Anspruch 3, dadurch gekennzeichnet, daß die gezahnte Fläche (62) des Gurtes (54) eine nach außen gewölbte Fläche ist.

5. Vorrichtung gemäß Anspruch 4, dadurch gekennzeichnet, daß die Durchgangsaufnahme (90) zwischen der Klinke (82) und einem Wippglied (76) definiert ist, das auf dem Ziehglied (64) um die gleiche Schwenkachse wie die Klinke (82) schwenkbar ist und das die Oberfäche (78) zum Auflagern auf der nicht-gezahnten Fläche des Gurtes (54) aufweist.

6. Vorrichtung gemäß Anspruch 5, dadurch gekennzeichnet, daß der Körper (14) einen Stopprand (92a) aufweist, der den Zähnen (62) des Gurtes (54) zugewendet ist, wobei die Anordnung so ist, daß bei Eingriff des Gurtes (54) in der Durchgangsaufnahme (90) eine Drehung des Ziehglieds (64) im Sinn des Lockerns des Gurtes (54) die Zähne (62) des letzteren in Eingriff mit dem Stopprand (92a) bringt, wonach die weitere Drehung des Ziehglieds (64) im Lockerungssinn bewirkt, daß die Klinke (82) über die Sägezähne (62) fährt, während der Gurt (54) fest gehalten wird, wobei als Folge die Länge des Gurtes (54) zwischen der Durchgangsaufnahme (90) und dem am Körper (14) verankerten Ende (60) des Gurtes (54) gekürzt wird.

7. Vorrichtung gemäß einem der vorangehenden Ansprüche, dadurch gekennzeichnet, daß der Körper (14) eine Schalenstruktur ist, mit einem Basisteil (16), der auf seiner Unterseite die Fläche (42) zum Auflagern auf der Schiene (R; R') und Öffnungen (56, 92) zum Durchtritt des Gurtes (54) aufweist und der auf seiner oberen Oberfläche einen Träger (44) trägt, der seinerseits die Schnalle (52) trägt, mit einem oberen Teil (18), der entlang der Schnalle (52) und ihres Trägers (44) angeordnet ist und auf dem der Balken (10) befestigt ist, und mit einer abnehmbaren Abdeckung (20), die den Bereich der Schnalle (52) und ihres Trägers (44) bedeckt.

8. Vorrichtung gemäß Anspruch 7, dadurch gekennzeichnet, daß der Träger (44) für die Schnalle (52) ein Vollblock (44) ist, der einen Schlitz (58) zum Durchtritt des Gurtes (54) aufweist, und daß der Gurt (54) an seinem verankerten Ende eine Verankerungserweiterung (60) aufweist, die so dimensioniert ist, daß sie nicht durch den Schlitz (58) durchtritt.

9. Vorrichtung gemäß Anspruch 7 oder 8, dadurch gekennzeichnet, daß der obere Teil (18) des Körpers (14) so geformt ist, daß er einen Kanal (22) zum Aufnehmen des Balkens (10) aufweist.

10. Vorrichtung gemäß einem der Ansprüche 7 bis 9, dadurch gekennzeichnet, daß der Basisteil (16) und die Abdeckung (20) des Körpers (14) durch ein mit einem Schlüssel betätigbares Schloß (94) verbunden sind.

11. Vorrichtung gemäß einem der vorangehenden Ansprüche, dadurch gekennzeichnet, daß die Fläche (42) des Körpers (14), die auf der Schiene (R; R') auflagert, eine unter ihr angeschlossene Auskragung (38) zum Eingreifen einer Seite der Schiene (R; R') aufweist, die jener Seite gegenüberliegt, die mit dem Teil des Gurtes (54) korrespondiert, der durch die Schnalle (52) eingefädelt werden kann, um den Balken (R; R') zwischen dieser Auskragung (38), der Lagerfläche (42) und dem Gurt selbst zu halten.

12. Vorrichtung gemäß Anspruch 11, dadurch gekennzeichnet, daß die Auskragung (38) eine zentrale Ausnehmung (40) für den Durchtritt des Gurtes (54) aufweist.

13. Vorrichtung gemäß Anspruch 11 oder 12, dadurch gekennzeichnet, daß die Auskragung (38) Teil eines Elements (38) aus weichem Material, wie z.B. Gummi, ist, das auch die Fläche (42) des Körpers (14) zum Auflagern auf der Schiene (R; R') definiert.

14. Vorrichtung gemäß einem der vorangehenden Ansprüche, dadurch gekennzeichnet, daß der Körper (14) und der Balken (10) miteinander durch gegenseitige Befestigungsmittel (24, 30, 32) verbunden sind, die ein Justieren der Position des Körpers (14) entlang des Balkens (10) erlauben.

15. Vorrichtung gemäß Anspruch 14, dadurch gekennzeichnet, daß der Balken (10) röhrenförmig ist und einen länglichen Schlitz (24) in seinem unteren Teil aufweist, der mit einem oberen Teil (18) des Körpers (14) zusammenpaßt, und daß eine Klemmschraube (30) sich durch den Körper (14) und den Schlitz (24) erstreckt und einen Kopf aufweist, der unterhalb des Körpers (14) angeordnet ist, und daß der Balken (10) eine Mutter (32) enthält, in die die Schraube (30) eingreift.

## Revendications

1. Dispositif, telle qu'une galerie de support de charge ou une galerie à skis, servant à transporter des charges sur le toit d'un véhicule automobile pourvu d'un couple de rails latéraux (R; R') s'étendant longitudinalement, du type comprenant une barre (10) qui peut être montée transversalement sur le couple de rails (R; R') et pourvue d'agencements de support et de fixation (12) destinés à reposer sur les rails et à leur être fixés, dans lequel chaque agencement de support et de fixation (12) comprend un corps (14) auquel est fixée la barre (10), et qui présente une face (42) destinée à porter sur le rail (10), un organe flexible (54) allongé, destiné à s'enrouler de manière serrée autour du rail (R; R'), dont une première extrémité est ancrée au corps (14), et dont une deuxième extrémité est agencée de façon à s'engager de manière amovible dans un moyen de fixation (5) fixé au corps (14),
caractérisé en ce que
- l'organe flexible allongé est une courroie (54) ayant une partie dentée, sur la deuxième extrémité,
- le moyen de fixation est une boucle de traction et de serrage (52) fixée au corps (14) et destinée à coopérer avec les dents de la courroie (54) passée en son sein,
- de manière que la courroie (50) puisse être tirée par ladite boucle (52) et serrée afin d'éviter tout mouvement coulissant en correspondance avec sa partie dentée, dans plusieurs positions qui peuvent être sélectionnées d'après les dimensions de la section transversale du rail (R; R').

2. Dispositif selon la revendication 1, caractérisé en ce que la boucle (52) comprend un organe de traction manuelle (64) de type à levier de deuxième ordre qui présente un siège traversant (90) intermédiaire dans lequel peut être enfilée la courroie (54), une extrémité de l'organe de traction (64) étant pivotée sur le corps (14) autour d'un axe de pivot transversal à la courroie (54), de manière que l'organe de traction (64) puisse être tourné entre deux positions angulaires, afin d'effectuer un desserrage et un serrage, et un organe de préemption (82) étant associé aux sièges traversants (90) afin de serrer la courroie (54) par rapport aux sièges (90), dans lesdites positions sélectionnables, l'agencement étant tel que, lorsque la courroie (54) est enfilée et serrée dans le siège (90), la rotation de l'organe de traction (64) depuis la position de desserrage vers la position de serrage provoque le déplacement de la courroie (54) depuis un état de desserrage à un état serré autour du rail (R; R') et de manière en outre que, lorsque l'organe de traction (64) se trouve dans la position de serrage, la courroie (54) exerce une composante de force sur l'organe de traction (64) afin de le maintenir dans la position serrée.

3. Dispositif selon la revendication 2, caractérisé en ce que l'une des faces (62) de la courroie (54) est en dents de scie et l'organe de préemption est un cliquet (82) et l'organe de préemption est un cliquet (82) qui définit une surface du siège traversant (90) qui correspond à la face dentée (62) de la courroie (54), le cliquet (82) étant pivoté sous la forme d'un levier de premier ordre sur l'organe de traction (64) afin de pivoter autour d'un axe de pivot parallèle à l'axe de pivot de l'organe de traction (64), une extrémité du cliquet (82) étant réalisée sous la forme d'un bec (84) afin de s'engager contre les dents (62) de la courroie (54) et son autre extrémité (86) servant d'organe de libération, le siège traversant (90) ayant une surface (70) destinée à porter sur cette face de la courroie (54) à l'opposé de la face dentée, et des moyens élastiques (88) étant prévus afin de déplacer le cliquet (82) vers la position dans laquelle son bec (84) s'engage contre les dents (62).

4. Dispositif selon la revendication 3, caractérisé en ce que la face dentée (62) de la courroie (54) est une face convexe.

5. Dispositif selon la revendication 4, caractérisé en ce que le siège traversant (90) est définit entre le cliquet (82) et un organe à bascule (76) monté pivotant sur l'organe de traction (64) autour du même axe de pivot que le cliquet (82) et qui présente ladite surface (70) afin de porter sur la face non dentée de la courroie (54).

6. Dispositif selon la revendication 5, caractérisé en ce que le siège (14) présente un bord d'arrêt (92a) tourné vers les dents (62) de la courroie (54), l'agencement étant tel que, lorsque la courroie (54) est engagée dans le siège traversant (90), la rotation de l'organe de traction (64) dans le sens de desserrage de la courroie (54) amène les dents (62) de cette dernière en contact avec le bord d'arrêt (92a), à la suite de quoi une rotation supplémentaire de l'organe de traction (64) dans le sens de desserrage provoque la montée du cliquet (82) sur les dents de scie (62), tandis que la courroie (54) est maintenue rigide, entraînant un raccourcissement de la longueur de la courroie (54) entre le siège traversant (90) et l'extrémité (60) de la courroie (54) ancrée au corps (14).

7. Dispositif selon l'une quelconque des revendications précédentes, caractérisé en ce que le corps (14) est une structure d'enveloppe comprenant une partie de base (16) ayant ladite face (42) destinée à porter sur le rail (R; R'), sur sa face inférieure, et des ouvertures (56, 92) servant au passage de la courroie (54) et qui supporte un support (44) sur sa face supérieure, supportant à son tour la boucle (52), une partie supérieure (18) disposée latéralement par rapport à la boucle (52) et à son support (44) et sur laquelle est fixée la barre (10), et un couvercle amovible (20) qui recouvre la zone de la boucle (52) et de son support (44).

8. Dispositif selon la revendication 7, caractérisé en ce que le support (44) destiné à la boucle (52) est un bloc massif (44) qui présente une fente (58) destinée au passage de la courroie (54) et la courroie (54) présente, au niveau de son extrémité ancrée , un agrandissement d'ancrage (60) dont les dimensions empêchent le passage à travers la fente (58).

9. Dispositif selon la revendication 7 ou 8, caractérisé en ce que la partie supérieure (18) du corps (14) est formée de manière à présenter un canal (22) destiné à loger la barre (10).

10. Dispositif selon l'une quelconque des revendications 7 à 9, caractérisé en ce que la partie de base (16) et le couvercle (20) du corps (14) sont reliés entre eux par un verrou (94) actionnable par une clé.

11. Dispositif selon l'une quelconque des revendications précédentes, caractérisé en ce que la face (42) du corps (14) qui porte sur le rail (R; R') présente une saillie (38), fixée au-dessous d'elle, destinée à s'engager par un côté du rail (R; R') opposé à celui correspondant à la partie de la courroie (54) qui peut être enfilée dans la boucle (52), de manière à maintenir la barre (R; R') entre cette saillie (38), la face de support (42) et sa courroie.

12. Dispositif selon la revendication 11, caractérisé en ce que la saillie (38) présente une cavité centrale (40) destinée au passage de la courroie (54).

13. Dispositif selon la revendication 11 ou 12, caractérisé en ce que la saillie (38) fait partie d'un élément (38) en matériau souple, tel que du caoutchouc, qui définit également la face (42) du corps (14) afin de porter sur le rail (R, R').

14. Dispositif selon l'une quelconque des revendications précédentes, caractérisé en ce que le corps (14) et la barre (10) sont reliés ensemble par des moyens de fixation mutuels (24, 30, 32) qui permettent de régler la position du corps (14) le long de la barre (10).

15. Dispositif selon la revendication 14, caractérisé en ce que la barre (10) est tubulaire et présente, dans sa partie inférieure, une fente longitudinale (24), qui s'adapte à une partie supérieure (18) du corps (14) et une vis de serrage (30) s'étend dans le corps (14) et la fente (24) et présente une tête se trouvant au-dessous du corps (14), et la barre (10) contient un écrou (32) engagé par la vis (30).
